# EUROPÄISCHE PATENTANMELDUNG

(11) **EP 2 426 018 A1**
(43) Veröffentlichungstag der Anmeldung: **07.03.2012**
(21) Anmeldenummer: 11006641.2
(22) Anmeldetag: 12.08.2011
(51) Int. Cl.: B60T 7/04, F16D 23/12, F16D 65/14, G05G 7/04, G05G 1/30

(54) **Fußhebelwerk für ein Fahrzeug**

(30) Priorität: 04.09.2010 DE 102010044417
(71) Anmelder: Volkswagen Aktiengesellschaft, 38436 Wolfsburg (DE)
(72) Erfinder: Hettwer, Sandra, 38527 Meine (DE); Wesche, Carsten, 38104 Braunschweig (DE); Edler, Martin, 38112 Braunschweig (DE)

(57) **Zusammenfassung**

Es wird ein Fußhebelwerk (1) mit einer Übertotpunktfederanordnung (6) vorgeschlagen, die aus einem ersten äußeres und einem in demselben gleitgelagerten zweiten inneren Federführungselement (8, 9) besteht. In einem gebildeten Ringraum (16) ist zumindest eine Schraubendruckfeder (17) angeordnet, die sich einenends am ersten äußeren Federführungselement (8) und anderenends am zweiten inneren Federführungselement (9) abstützt. Das erste äußere Federführungselement (8) ist mittels an seinem einem zweiten Hebelarm (2b) eines Pedalhebels (2) zugewandten Ende (8a) angeordneter Lagermittel (18) an einem Lagerbock (3) schwenkgelagert, während an einem ebenfalls dem Hebelarm (2b) des Pedalhebels (2) zugewandten Ende (9a) des zweiten inneren Federführungselementes (9) der zweite Hebelarm (2b) angebunden ist.

## Beschreibung

Die Erfindung betrifft ein Fußhebelwerk für ein Fahrzeug, insbesondere Kraftfahrzeug, nach dem Oberbegriff des Patentanspruchs 1 der Erfindung.

Aus der Praxis ist es seit geraumer Zeit bekannt, ein die Kupplungsbetätigung unterstützendes Federelement so anzuordnen, dass dieses zunächst der Kupplungspedalbetätigung entgegen wirkt und nach einem bestimmten Schwenkweg des Pedalhebels ein Moment auf denselben erzeugt, welches im gleichen Sinne wie die vom Fahrzeugführer aufgewendete Pedalkraft wirkt. Derartige Anordnungen wirken nach dem an sich bekannten Übertotpunktfeder-Prinzip, bei dem sich der Kraftvektor nach Überschreiten des Übertotpunktes (Kraftumkehrpunktes) umkehrt. Insoweit wird auch auf die einleitenden Ausführungen in der DE 202 20 483 U1 verwiesen.

So ist aus besagter DE 202 20 483 U1 eine Kupplungspedalerie für ein Kraftfahrzeug mit einem in einem Lagerbock um eine Drehachse schwenkbeweglich gelagerten zweiarmigen Pedalhebel bekannt, wobei ein erster Hebelarm desselben an seinem freien Ende üblicherweise eine Pedalplatte trägt und ein zweiter vorliegend weitestgehend rechtwinklig zum ersten Hebelarm angeordneter Hebelarm mit einer Übertotpunktfederanordnung verbunden ist. Besagte Übertotpunktfederanordnung besteht vorliegend aus einer Schraubenfeder in Form einer Druckfeder, einer inneren Federführung und einem becherförmigen Befestigungselement. Das becherförmige Befestigungselement hat zwei seitliche Fortsätze, die der Befestigung der Übertotpunktfederanordnung am zweiten Hebelarm des Pedals dienen. In einem Ringraum zwischen dem becherförmigen Befestigungselement und der inneren Federführung ist die Schraubenfeder angeordnet, die sich ihrerseits einenends über einen Stirnflansch der inneren Federführung am becherförmigen Befestigungselement und damit am zweiten Hebelarm des Pedals und anderenends über eine Rollenanordnung und ein am Lagerbock ortsfest gelagertes Steuerkurvenelement zur Beeinflussung der Federkennlinie der Schraubenfeder über den Federweg derselben am Lagerbock abstützt. Am vom zweiten Hebelarm des Pedalhebels abgewandten Ende der inneren Federführung ist des Weiteren eine Befestigungsachse zur Befestigung der Übertotpunktfederanordnung am Lagerbock vorgesehen. Um eine bestimmungsgemäße axiale Bewegung der Übertotpunktfederanordnung zu gewährleisten, sind die Rollenanordnung und die Befestigungsachse in zugordneten Langlöchern der inneren Federführung verschiebbar geführt. Aus der EP 1 596 268 A2 ist ferner ein Fußhebelwerk der gattungsgemäßen Art bekannt, dessen Übertotpunktfederanordnung durch zwei teleskopierbare Tragteile gebildet ist, zwischen denen eine Schraubendruckfeder abgestützt ist, wobei ein zu einem zweiten Hebelarm eines Pedals zugewandtes Ende des einen Tragteils mit besagtem Hebelarm und ein vom zweiten Hebelarm des Pedals abgewandtes Ende des anderen Tragteils mit einem Lagerbock der Kupplungspedalerie verbunden ist.

Aufgabe der Erfindung ist es, ein Fußhebelwerk für ein Fahrzeug, insbesondere Kraftfahrzeug, mit einer alternativen Übertotpunktfederanordnung zu schaffen, welche einfach und kostengünstig herstellbar sowie montierbar ist und bei geringem Bauraumbedarf eine sichere Funktion gewährleistet.

Ausgehend von einen Fußhebelwerk für ein Fahrzeug, insbesondere Kraftfahrzeug, mit einem in einem Lagerbock um eine Drehachse schwenkbeweglich gelagerten zweiarmigen Pedalhebel, wobei ein erster Hebelarm desselben an seinem freien Ende eine Pedalplatte trägt und ein zweiter Hebelarm mit einer Übertotpunktfederanordnung verbunden ist, wird die gestellte Aufgabe dadurch gelöst, dass die Übertotpunktfederanordnung ein erstes äußeres und ein zweites inneren Federführungselement aufweist, wobei das erste äußere Federführungselement mit einem zum zweiten Hebelarm des Pedalhebels zugewandten Ende und einem vom zweiten Hebelarm abgewandten Ende sowie mit einer Seitenwandung ausgebildet ist, wobei das zweite innere Federführungselement innerhalb des ersten äußeren Federführungselementes, einen Ringraum zwischen dem ersten äußeren und dem zweiten inneren Federführungselement ausbildend, in axialer Richtung des ersten äußeren Federführungselementes gleitgelagert ist, wobei innerhalb des besagten Ringraumes zumindest eine Schraubendruckfeder angeordnet ist, die sich ihrerseits einenends am ersten äußeren Federführungselement und anderenends am zweiten inneren Federführungselement abstützt, wobei das erste äußere Federführungselement mittels an seinem dem zweiten Hebelarm des Pedalhebels zugewandten Ende angeordneter Lagermittel am Lagerbock schwenkgelagert ist, und wobei am ebenfalls dem zweiten Hebelarm des Pedalhebels zugewandten Ende des zweiten inneren Federführungselementes der zweite Hebelarm angebunden ist.

Durch diese Maßnahme ist ein Fußhebelwerk mit einer kompakt ausgebildeten Übertotpunktfederanordnung geschaffen, deren Bau und Funktionsraum auf ein Minimum reduziert ist, da die erforderlichen Anbindungen desselben an den Pedalhebel und den Lagerbock unmittelbar benachbart zueinander angeordnet sind, nämlich an Enden der Federführungselemente, die dem Pedalhebel bzw. dessen zweiten Hebelarm zugewandt sind.

Wie die Erfindung weiter vorsieht, können das erste äußere und das zweite innere Federführungselement zueinander korrespondierende Führungsmittel zur definierten axialen Führung des zweiten inneren Federführungselementes im ersten äußeren Federführungselement aufweisen, wodurch die Funktion der Übertotpunktfederanordnung beeinträchtigende Fehlstellungen insbesondere der beiden relativ zueinander teleskopierbaren Federführungselemente vorteilhaft vermeidbar sind.

Dabei ist es für einen besonders kompakten Aufbau und eine einfach herzustellende Gleitlagerung der beiden Federführungselemente zueinander von Vorteil, wenn das erste äußere Federführungselement topf- oder rohrförmig und/oder das zweite innere Federführungselement topf-, rohr- oder stabförmig ausgebildet ist.

Besonders vorteilhaft können dabei die Führungsmittel derart ausgebildet sein, dass das topf-, rohr- oder stabförmig ausgebildete zweite innere Federführungselement beidenends im ersten äußeren Federführungselement gleitgelagert ist, woraus eine erhöhte Funktionssicherheit der Übertotpunktfederanordnung resultiert. Wie die Erfindung noch vorsieht, kann der Ringraum in Abhängigkeit vom Durchmesser der Schraubendruckfeder in seiner radialen Ausdehnung derart gewählt sein, dass eine gleitende Seitenabstützung der zumindest einen Schraubendruckfeder durch zumindest eines der Federführungselemente über den Federweg, vorzugsweise gesamten Federweg, gestattet ist. Eine derartige Seitenabstützung verhindert ein etwaiges für die Funktionsfähigkeit der Übertotpunktfederanordnung nachteiliges seitliches Ausknicken der Schraubendruckfeder. Des Weiteren kann vorgesehen sein, dass erstes äußeres und zweites inneres Federführungselement zueinander korrespondierende und eine axiale Relativbewegung zwischen den beiden Federführungselementen begrenzende sowie einen Montageverbund bewirkende Formschlussmittel aufweisen. Die Übertotpunktfederanordnung kann dadurch vorteilhaft als vormontiertes Bauteil mit unverlierbar zusammengehaltenen Einzelbestandteilen sowie mit vorgespannter Schraubendruckfeder für den Endmontageprozess eines Fahrzeugs bereitgestellt werden, wobei dann lediglich zwei Befestigungsmaßnahmen erforderlich werden. Ferner kann die Anbindung des zweiten Hebelarms an das zweite innere Federführungselement durch eine Gabelkopfanbindung bewirkt sein, welche durch einen Gabelkopf, der seinerseits formschlüssig mit einer Gabelkopfaufnahme verbindbar ist, gebildet ist. Weiter vorteilhaft können bauraumminimierend und statisch günstig sowohl der Pedalhebel als auch die Übertotpunktfederanordnung zwischen zwei Seitenwangen des Lagerbocks schwenkgelagert sein. Schließlich kann vorgesehen sein, dass die Bestandteile der Übertotpunktfederanordnung, ausgenommen die zumindest eine Schraubenfeder, aus Kunststoff bestehen, woraus Gewichts- und Kosteneinsparungen im Hinblick auf herkömmliche Übertotpunktfederanordnungen resultieren. Die Erfindung betrifft auch ein Fahrzeug, insbesondere Kraftfahrzeug, mit einem Fußhebelwerk der vorstehend beschriebenen Art.

Die Erfindung wird nachstehend anhand eines in den Zeichnungen schematisch dargestellten Ausführungsbeispieles erläutert. Es zeigen:
- Fig. 1: das erfindungsgemäße Fußhebelwerk in einer perspektivischen Ansicht,
- Fig. 2: das Fußhebelwerk nach Fig. 1 in einer Seitenansicht mit der Darstellung des Kupplungspedals und einer erfindungswesentlichen Übertotpunktfederanordnung des Fußhebelwerks in zwei Betriebsstellungen,
- Fig. 3: die Ansicht "A" nach Fig. 1,
- Fig. 4: eine perspektivische Ansicht der erfindungswesentlichen Übertotpunktfederanordnung des Fußhebelwerks nach Fig. 1,
- Fig. 5: den Schnitt "I-I" nach Fig. 4,
- Fig. 6: den Schnitt "II-II" nach Fig. 4,
- Fig. 7a: das erfindungsgemäße Fußhebelwerk nach Fig. 1 in seiner Funktion zu Beginn einer Kupplungsbetätigung zum Öffnen der Kupplung zu einem Zeitpunkt "t₁" (Ausgangsstellung),
- Fig. 7b: die Ansicht "B" nach Fig. 7a,
- Fig. 8a: das erfindungsgemäße Fußhebelwerk nach Fig. 1 in seiner Funktion während der Kupplungsbetätigung zum Öffnen der Kupplung zu einem Zeitpunkt "t₂" (Erreichen des Kraftumkehrpunktes der Übertotpunktfederanordnung),
- Fig. 8b: die Ansicht "C" nach Fig. 8a,
- Fig. 9a: das erfindungsgemäße Fußhebelwerk nach Fig. 1 in seiner Funktion während der Kupplungsbetätigung zum Öffnen der Kupplung zu einem Zeitpunkt "t₃" (Endstellung), und
- Fig. 9b: die Ansicht "D" nach Fig. 9a.

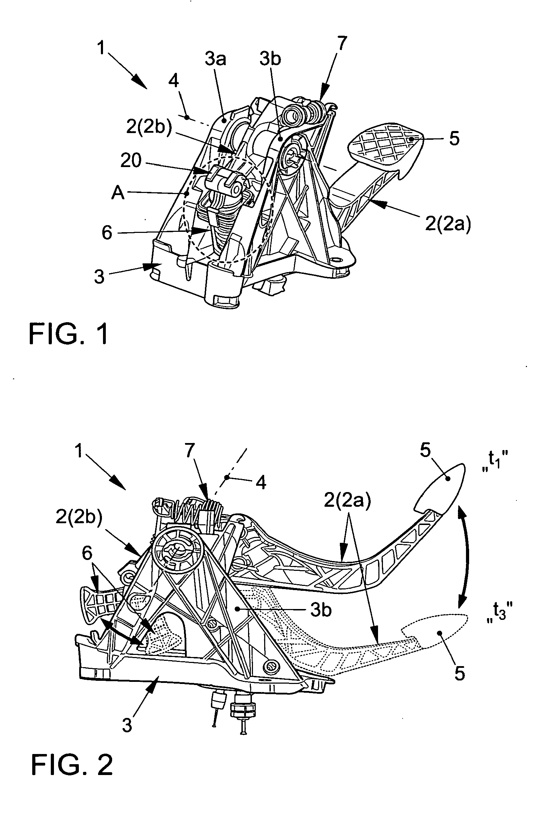

Die Fig. 1 und 2 zeigen danach ein Fußhebelwerk 1 für ein Fahrzeug, insbesondere Kraftfahrzeug, zur beispielsweise hydraulischen Kupplungsbetätigung, wobei bekanntermaßen eine von einem Fahrzeugführer auf einen Pedalhebel 2 aufgebrachte Pedalkraft vermittels eines nicht näher dargestellten, jedoch an sich bekannten Geberzylinders und Nehmerzylinders hydraulisch übersetzt und an einen Ausrücker einer ebenfalls an sich bekannten und demgemäß nicht näher dargestellten Reibungskupplung weitergeleitet wird.

Die Fußkraft des Fahrzeugführers wird dabei über den in einem Lagerbock 3 um eine Drehachse 4 schwenkbeweglich gelagerten Pedalhebel 2 und ein nicht näher dargestelltes Gestänge auf den Kolben des besagten Geberzylinders übertragen. Der im Druckraum des Geberzylinders erzeugte Fluiddruck pflanzt sich in zugeordneten Fluidleitungen bis zum Nehmerzylinder fort und bewirkt am Kolben des Nehmerzylinders eine Kraft, die über ein oder mehrere Betätigungsglieder, wie beispielsweise einem Stößel mit angeschlossenem Ausrückhebel den Ausrücker betätigt und die Kupplung auskuppelt respektive öffnet. Zum Einkuppeln respektive zum Schließen der Kupplung drückt üblicherweise eine Membranfeder der Kupplung über den Ausrücker, den Ausrückhebel sowie den Stößel die Kolben von Nehmerzylinder und Geberzylinder samt dem Pedalhebel 2 in die Ausgangsstellung zurück.

Der Pedalhebel 2 trägt am freien Ende eines ersten Hebelarmes 2a eine Pedalplatte 5 und verfügt über einen zum ersten Hebelarm 2a weitestgehend rechtwinklig abgestellten zweiten Hebelarm 2b, dessen freies Ende mit einer Übertotpunktfederanordnung 6 verbunden ist. Ferner ist eine an sich bekannte Rückstellfeder 7, vorliegend in Form einer Schraubenzugfeder vorgesehen, welche einenends am Lagerbock 3 und anderenends am Pedalhebel 2 befestigt ist und nach Betätigung des Pedalhebels 2 die Rückstellung desselben in seine Ausgangsstellung unterstützt.

Sowohl der Pedalhebel 2 als auch die Übertotpunktfederanordnung 6 sind platzsparend und statisch günstig zwischen zwei Seitenwangen 3a, 3b des Lagerbocks 3 schwenkgelagert.

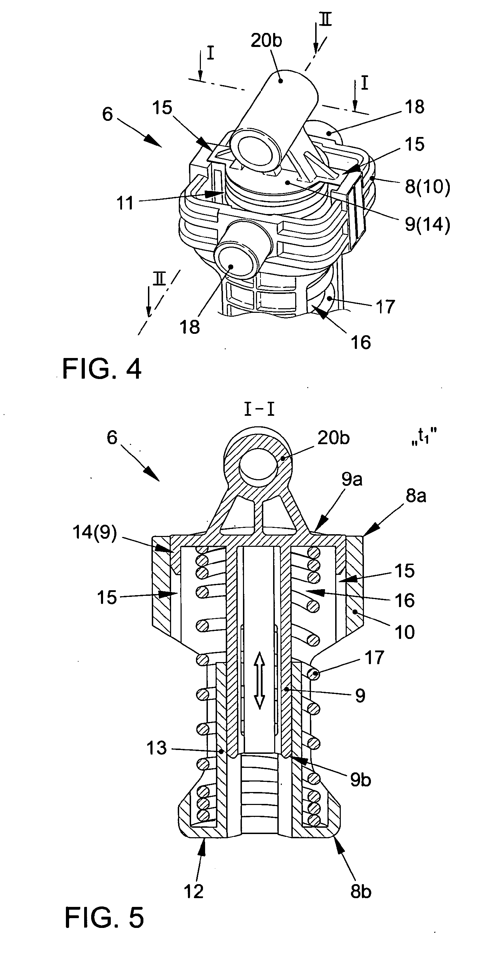

Die Übertotpunktfederanordnung 6 weist ihrerseits ein erstes äußeres Federführungselement 8 und ein in demselben gleitgelagertes respektive teleskopierbares zweites inneres. Federführungselement 9 auf (vgl. insbes. Fig. 4 bis 6).

Insoweit ist vorliegend das erste äußere Federführungselement 8 überwiegend topfförmig mit einem dem zweiten Hebelarm 2b des Pedalhebels 2 zugewandten Ende 8a und einem vom zweiten Hebelarm 2b abgewandten Ende 8b, sowie mit einer abschnittsweise geschlossenen Seitenwandung 10 ausgebildet. Die Topföffnung 11 befindet sich hebelarmseitig, wogegen der Topfboden 12 das vom zweiten Hebelarm 2b abgewandte Ende 8b bildet.

Das zweite innere Federführungselement 9 ist seinerseits überwiegend rohrförmig ausgebildet und mit seinem vom zweiten Hebelarm 2b abgewandten Ende 9b innerhalb eines sich vom Topfboden 12 zur Topföffnung 11 hin sich axial erstreckenden ersten Führungsmittels 13 in Form einer rohrförmigen Aufnahme axial geführt. Am dem zweiten Hebelarm 2b zugewandten Ende 9a des zweiten inneren Federführungselementes 9 ist ein Stirnflansch 14 vorgesehen, der seinerseits sich radial an der Innenkontur der Seitenwandung 10 abstützt und in nutenförmigen zweiten Führungsmitteln 15 axial geführt ist.

Zwischen dem ersten äußeren Federführungselement 8 und dem zweiten inneren Federführungselement 9 ist ein Ringraum 16 gebildet, in welchem eine Schraubendruckfeder 17 angeordnet ist. Die Schraubendruckfeder 17 stützt sich einenends am ersten äußeren Federführungselement 8, vorliegend am Topfboden 12 desselben, und anderenends am besagten Stirnflansch 14 des zweiten inneren Federführungselementes 9 ab.

Der gebildete Ringraum 16 ist dabei in Abhängigkeit vom Durchmesser der Schraubendruckfeder 17 in seiner radialen Ausdehnung derart gewählt respektive bemessen, dass eine gleitende Seitenabstützung der Schraubendruckfeder 17 durch wenigstens eines der Federführungselemente 8, 9 über den Federweg, vorzugsweise über den gesamten Federweg, gestattet ist.

Das erste äußere Federführungselement 8 verfügt an seinem dem zweiten Hebelarm 2b des Pedalhebels 2 zugewandten Ende 8a über zwei radial gegenüberliegend angeordnete und von der Seitenwandung 10 des ersten äußeren Federführungselementes 8 radial abgestellte Lagermittel 18 in Form von Drehzapfen, die ihrerseits in dazu korrespondierenden Aufnahmen 19 der Seitenwangen 3a, 3b des Lagerbocks 3 schwenkgelagert sind.

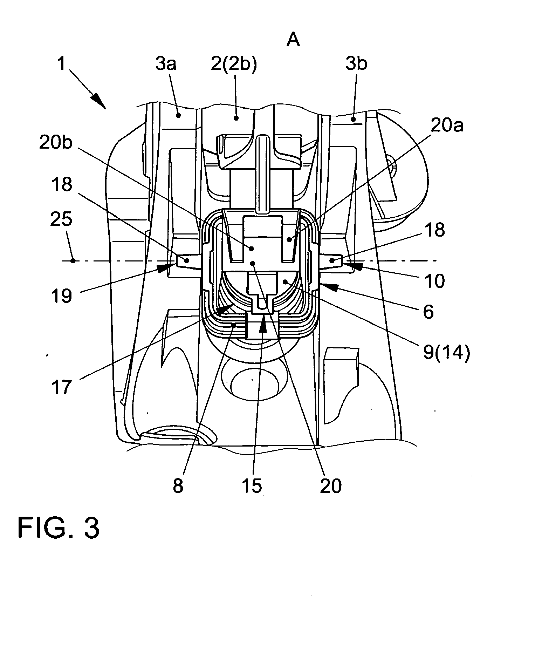

Am ebenfalls dem zweiten Hebelarm 2b des Pedalhebels 2 zugewandten Ende 9a des zweiten inneren Federführungselementes 9 ist das freie Ende des zweiten Hebelarms 2b des Pedalhebels 2 angelenkt. Hierzu ist eine sogenannte Gabelkopfanbindung 20 vorgesehen, welche durch einen am freien Ende des zweiten Hebelarms 2b des Pedalhebels 2 angeordneten Gabelkopf 20a und eine am hebelarmseitigen Ende 9a des zweiten inneren Federführungselementes 9 angeordnete Gabelkopfaufnahme 20b gebildet ist (Fig. 1 bis 3).

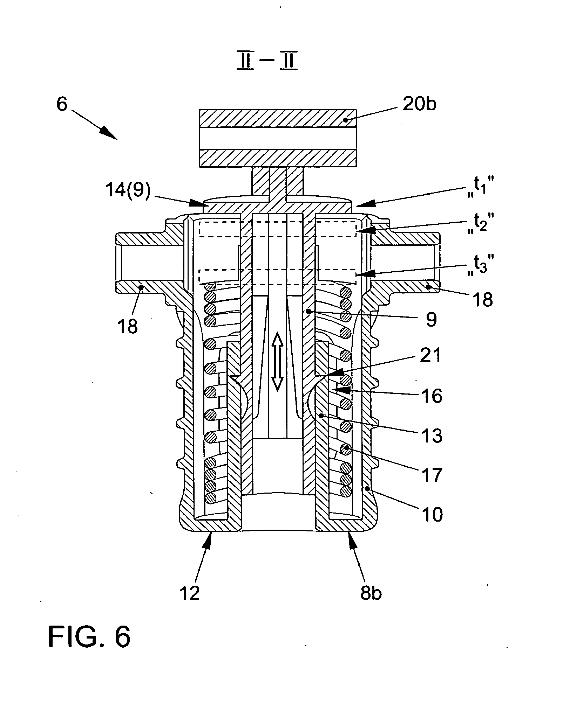

Wie insbesondere aus Fig. 6 zu entnehmen ist, weisen des Weiteren erstes äußeres und zweites inneres Federführungselement 8, 9 zueinander korrespondierende und eine axiale Relativbewegung zwischen den beiden Federführungselementen 8, 9 begrenzende sowie einen Montageverbund bewirkende Formschlussmittel 21 in Form von Rasthaken am zweiten inneren Federführungselement 9 und Hinterschneidungen am ersten Führungsmittel 13 des ersten äußeren. Federführungselementes 8 auf.

Die Montage der Übertotpunktfederanordnung 6 erfolgt dabei vorzugsweise derart, dass zunächst das erste äußere Federführungselement 8 mit der Schraubendruckfeder 17 bestückt und nachfolgend mit dem zweiten inneren Federführungselement 9 komplettiert wird, indem der rohrförmige Teil des zweiten inneren Federführungselementes 9 in das rohrförmig ausgebildete erste Führungsmittel 13 des ersten äußeren Federführungselementes 5 axial eingeführt wird, bis die besagten Formschlussmittel 21 verrasten. Die Länge der Schraubendruckfeder 17 ist dabei vorzugsweise derart gewählt, dass sie bereits eine bestimmte Vorspannung erfährt.

Der Vollständigkeit halber sei darauf hingewiesen, dass vorliegend die Bestandteile der Übertotpunktfederanordnung 6, ausgenommen deren Schraubendruckfeder 17, aus einem Kunststoff nach beispielsweise einem an sich bekannten Spritzgießverfahren hergestellt sind.

Vorstehendes Ausführungsbeispiel stellt auf ein topfförmig ausgebildetes erstes äußeres und ein rohrförmig ausgebildetes zweites inneres Federführungselement 8, 9 ab. Die Erfindung beschränkt sich jedoch nicht auf diese gewählte Ausgestaltung, sondern erfasst für den Fachmann sicherlich leicht nachvollziehbar unter der Voraussetzung der Bildung eines Ringraumes 16 sowie der Gewährleistung einer radialen Abstützung und einer axialen Verschiebbarkeit des zweiten inneren Federführungselementes 9 im ersten äußeren Federführungselement 8 auch ein erstes äußeres Führungselement 8, welches rohrförmig und ein zweites inneres Führungselement 9, welches topf- oder stabförmig ausgebildet ist (nicht näher dargestellt).

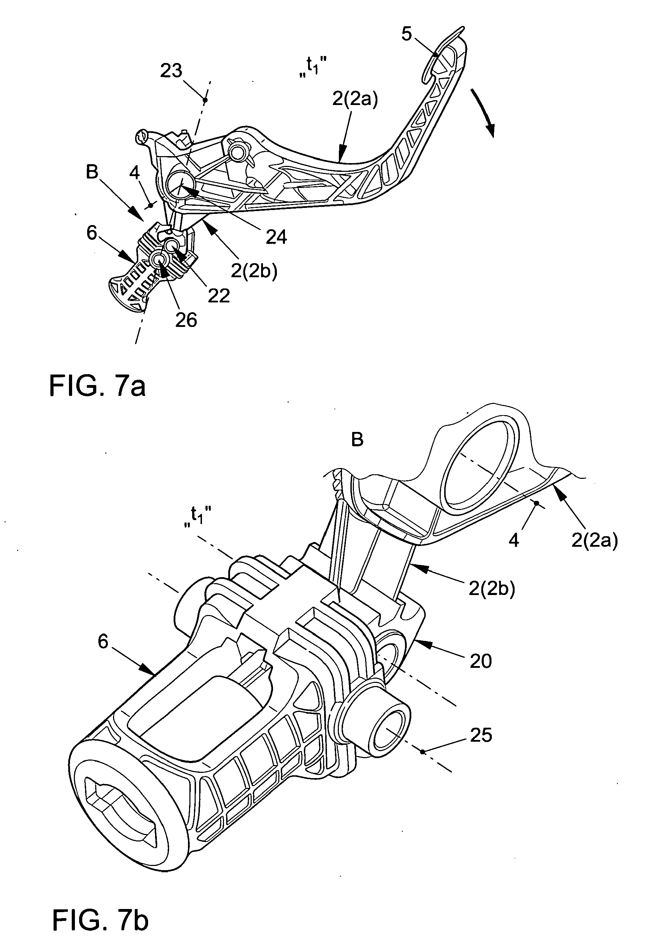

Nachfolgend wird unter Verweis auf insbesondere die Fig. 7a bis 9c die Erfindung in Ihrer Funktion näher beschrieben.

Gesetzt den Fall, der Pedalhebel 2 wird gemäß den Fig. 7a, 7b zu einem Zeitpunkt "t₁" (Ausgangsstellung) zum Lösen der Kupplung betätigt respektive gemäß Fig. 7a nach unten gedrückt, so wird zunächst das zweite innere Federführungselement 9 gegen die Federkraft der Schraubendruckfeder 17 weiter in das topfförmig ausgebildete erste äußere Federführungselement 8 hineingedrückt, während sich das erste äußere Federführungselement 8 am Lagerbock 3 abstützt.

Ein durch die Gabelkopfanbindung 20 gebildeter Lagerpunkt 22 liegt zunächst in einer Ausgangsstellung seitlich außerhalb einer imaginären Verbindungslinie 23, welche in einer gemeinsamen Ebene einen auf der Drehachse 4 des Pedalhebels 2 angeordneten Lagerpunkt 24 mit einem auf der Drehachse 25 des ersten äußeren Federführungselementes 8 angeordneten Lagerpunkt 26 verbindet.

Während der Bewegung des Pedalhebels 2 und des weiteren Zusammendrückens der Schraubendruckfeder 17 nähern sich die Verbindungslinie 23 und der durch die Gabelkopfanbindung 20 gebildete Lagerpunkt 22 an, bis der Lagerpunkt 22 in einer Flucht mit den Lagerpunkten 24 und 26 liegt respektive auf der Verbindungslinie 23 zum Liegen kommt.

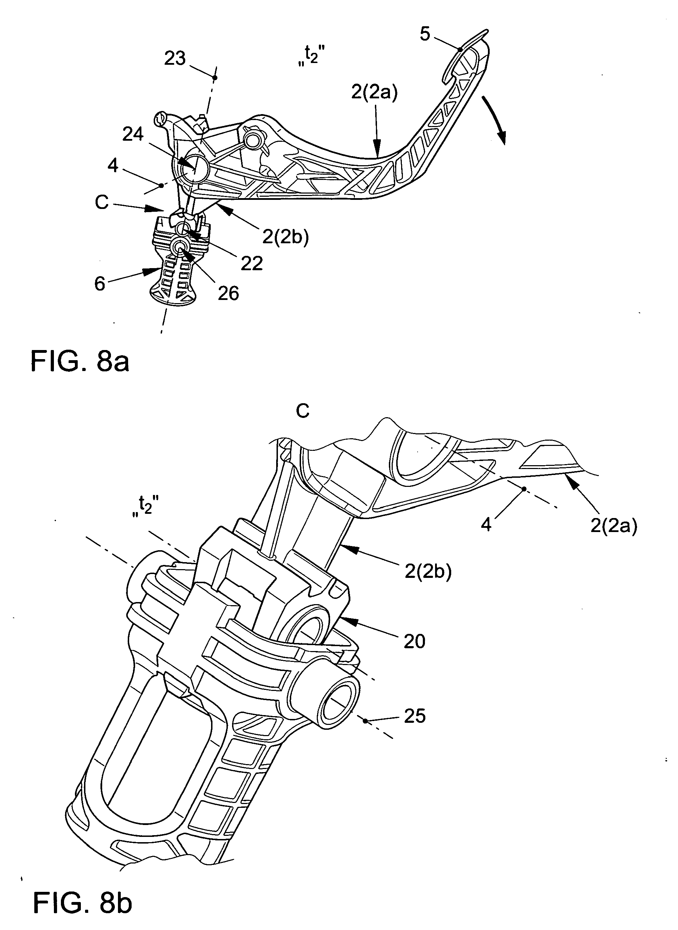

Zu diesem Zeitpunkt "t₂" (vgl. Fig. 8a, 8b) wird eine sogenannte Übertotpunktstellung erreicht und danach überschritten, bei der wie eingangs bereits erwähnt, sich der Kraftvektor der Schraubendruckfeder 17 (Kraftumkehrpunkt) umkehrt.

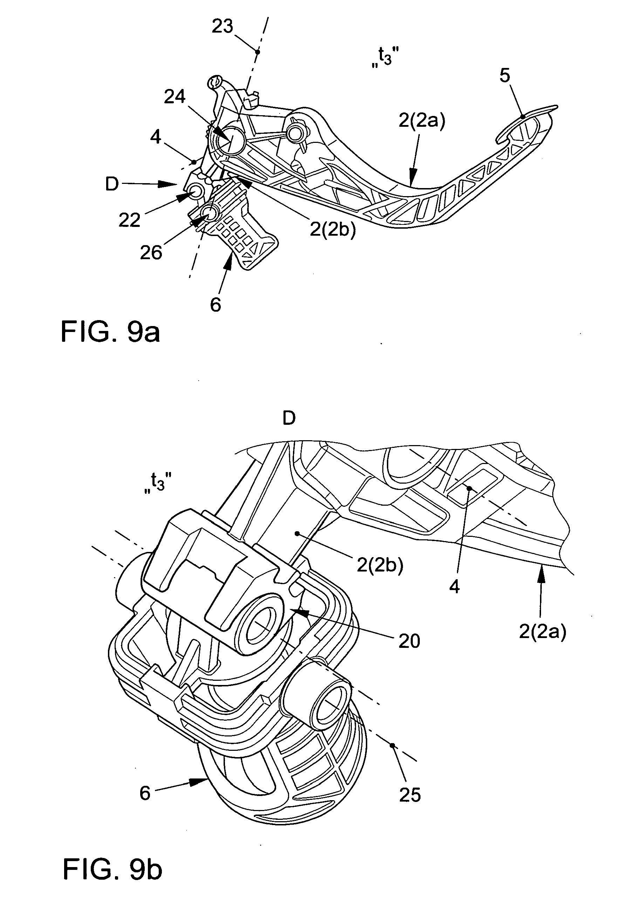

Die Schraubendruckfeder 17 entspannt sich und das zweite innere Federführungselement 9 bewegt sich wieder zurück bis der Pedalhebel 2 zu einem Zeitpunkt "t₃" seine untere Endstellung erreicht hat. Zu diesem Zeitpunkt "t₃" hat der Lagerpunkt 22 besagte imaginäre Verbindungslinie 23 wider verlassen und eine zur Ausgangstellung gegenüberliegend angeordnete Endstellung erreicht (vgl. Fig. 9a, 9b).

Während der gesamten Bewegung vollführt die Übertotpunktfederanordnung 6 eine Schwenkbewegung um die Drehachse 25 des ersten äußeren Federführungselementes 8 (vgl. insbes. Fig. 2).

Wird der Pedalhebel 2 in seine Ausgangstellung zurück überführt, kehrt sich der vorbeschriebene Bewegungsablauf um.

Im Wesentliche ist demgemäß herauszustellen, dass beim Betätigen des Pedalhebels 2 durch den Fahrzeugführer bis zum Erreichen der Übertotpunktstellung der Übertotpunktfederanordnung 6 zunächst eine Kraft gegen die Schraubendruckfeder 17 aufgebracht werden muss und nach Überschreiten besagter Übertotpunktstellung die Schraubendruckfeder 17 die weitere Betätigung des Pedalhebels 2 unterstützt. Durch diese von der besonders ausgebildeten Übertotpunktfederanordnung 6 bewirkte Kinematik kann definiert eine bestimmte Kupplungskennlinie erzeugt werden.

### Bezugszeichenliste

- 1: Fußhebelwerk
- 2: Pedalhebel
- 2a: erster Hebelarm
- 2b: zweiter Hebelarm
- 3: Lagerbock
- 3a: Seitenwange
- 3b: Seitenwange
- 4: Drehachse (Pedalhebel 2)
- 5: Pedalplatte
- 6: Übertotpunktfederanordnung
- 7: Rückstellfeder
- 8: erstes äußeres Federführungselement
- 8a: dem Pedalhebel 2 zugewandtes Ende
- 8b: vom Pedalhebel 2 abgewandtes Ende
- 9: zweites inneres Federführungselement
- 9a: dem Pedalhebel 2 zugewandtes Ende
- 9b: vom Pedalhebel 2 abgewandtes Ende
- 10: Seitenwandung
- 11: Topföffnung
- 12: Topfboden
- 13: erstes Führungsmittel
- 14: Stirnflansch
- 15: zweites Führungsmittel
- 16: Ringraum
- 17: Schraubendruckfeder
- 18: Lagermittel
- 19: Aufnahme
- 20: Gabelkopfanbindung
- 20a: Gabelkopf
- 20b: Gabelkopfaufnahme
- 21: Formschlussmittel
- 22: Lagerpunkt (Gabelkopfanbindung 20)
- 23: Verbindungslinie
- 24: Lagerpunkt (Pedalhebel 2)
- 25: Drehachse (erstes äußeres Federführungselement 8)
- 26: Lagerpunkt (erstes äußeres Federführungselement 8)

## Patentansprüche

1. Fußhebelwerk (1) für ein Fahrzeug, insbesondere Kraftfahrzeug, mit einem in einem Lagerbock (3) um eine Drehachse (4) schwenkbeweglich gelagerten zweiarmigen Pedalhebel (2), wobei ein erster Hebelarm (2a) desselben an seinem freien Ende eine Pedalplatte (5) trägt und ein zweiter Hebelarm (2b) mit einer Übertotpunktfederanordnung (6) verbunden ist, **dadurch gekennzeichnet, dass** die Übertotpunktfederanordnung (6) ein erstes äußeres und ein zweites inneren Federführungselement (8, 9) aufweist, wobei das erste äußere Federführungselement (8) mit einem dem zweiten Hebelarm (2b) des Pedalhebels (2) zugewandten Ende (8a) und einem vom zweiten Hebelarm (2b) abgewandten Ende (8b) sowie mit einer Seitenwandung (10) ausgebildet ist, wobei das zweite innere Federführungselement (9) innerhalb des ersten äußeren Federführungselementes (8), einen Ringraum (16) zwischen dem ersten äußeren und dem zweiten inneren Federführungselement (8, 9) ausbildend, in axialer Richtung des ersten äußeren Federführungselementes (8) gleitgelagert ist, wobei innerhalb des besagten Ringraumes (16) zumindest eine Schraubendruckfeder (17) angeordnet ist, die sich ihrerseits einenends am ersten äußeren Federführungselement (8) und anderenends am zweiten inneren Federführungselement (9) abstützt, wobei das erste äußere Federführungselement (8) mittels an seinem dem zweiten Hebelarm (2b) des Pedalhebels (2) zugewandten Ende (8a) angeordneter Lagermittel (18) am Lagerbock (3) schwenkgelagert ist, und wobei am ebenfalls dem Hebelarm (2b) des Pedalhebels (2) zugewandten Ende (9a) des zweiten inneren Federführungselementes (9) der zweite Hebelarm (2b) angebunden ist.

2. Fußhebelwerk nach Anspruch 1, **dadurch gekennzeichnet, dass** das erste äußere Federführungselement (8) topf- oder rohrförmig und/oder das zweite innere Federführungselement (9) topf-, rohr- oder stabförmig ausgebildet ist.

3. Fußhebelwerk (1) nach Anspruch 1 oder 2, **dadurch gekennzeichnet, dass** erstes äußeres und zweites inneres Federführungselement (8, 9) Führungsmittel (13, 15) zur definierten axialen Führung des zweiten inneren Federführungselementes (9) im ersten äußeren Führungselement (8) aufweist.

4. Fußhebelwerk (1) nach Anspruch 3, **dadurch gekennzeichnet, dass** die Führungsmittel (13, 15) derart ausgebildet sind, dass das topf-, rohr- oder stabförmig ausgebildete zweite innere Federführungselement (9) beidenends im ersten äußeren Federführungselement (8) gleitgelagert ist.

5. Fußhebelwerk (1) nach einem der Ansprüche 1 bis 4, **dadurch gekennzeichnet, dass** der Ringraum (16) in Abhängigkeit vom Durchmesser der Schraubendruckfeder (17) in seiner radialen Ausdehnung derart gewählt ist, dass eine gleitende Seitenabstützung der zumindest einen Schraubendruckfeder (17) durch wenigstens eines der Federführungselemente (8, 9) über den Federweg, vorzugsweise gesamten Federweg, gestattet ist.

6. Fußhebelwerk (1) nach einem der Ansprüche 1 bis 5, **dadurch gekennzeichnet, dass** erstes äußeres und zweites inneres Federführungselement (8, 9) zueinander korrespondierende und eine axiale Relativbewegung zwischen den beiden Federführungselementen (8, 9) begrenzende sowie einen Montageverbund bewirkende Formschlussmittel (21) aufweisen.

7. Fußhebelwerk (1) nach einem der Ansprüche 1 bis 6, **dadurch gekennzeichnet, dass** die Anbindung des zweiten Hebelarms (2b) an das zweite innere Federführungselement (9) durch eine Gabelkopfanbindung (20) bewirkt ist.

8. Fußhebelwerk (1) nach einem der Ansprüche 1 bis 7, **dadurch gekennzeichnet, dass** sowohl der Pedalhebel (2) als auch die Übertotpunktfederanordnung (6) zwischen zwei Seitenwangen (3a, 3b) des Lagerbocks (3) schwenkgelagert sind.

9. Fußhebelwerk (1) nach einem der Ansprüche 1 bis 8, **dadurch gekennzeichnet, dass** die Bestandteile der Übertotpunktfederanordnung (6), ausgenommen die zumindest eine Schraubendruckfeder (17), aus Kunststoff bestehen.

10. Fahrzeug, insbesondere Kraftfahrzeug, mit einem Fußhebelwerk (1) nach einem der Ansprüche 1 bis 9.
